# EUROPEAN PATENT APPLICATION

(11) **EP 4 783 684 A1**
(43) Date of publication of application: **29.07.2026**
(21) Application number: 25202457.5
(22) Date of filing: 16.09.2025
(51) Int. Cl.: H04W 52/28, H01Q 1/24, H04B 1/3827, H04W 52/36, G06F 3/01

(54) **ELECTRONIC DEVICE AND NON-TRANSITORY COMPUTER READABLE MEDIUM**

(30) Priority: 23.01.2025 CN 202510108786
(71) Applicant: Getac Technology Corporation, New Taipei City 221009 (TW)
(72) Inventor: CHOU, Po-Heng, Taipei City 11568 (TW)
(74) Representative: Viering, Jentschura & Partner mbB Patent- und Rechtsanwälte

(57) **Abstract**

An electronic device includes an antenna, a radio frequency transmitter module, a camera, memories and a processing circuit. The radio frequency transmitter module transmits a radio signal at a transmission power level through the antenna. The processing circuit accesses data and instructions stored in the memories to perform the following steps. Perform scene detection on at least one image to obtain scene information. Determine whether to switch an operation mode to a handheld mode according to the scene information. If the operation mode is switched to the handheld mode, following steps are performed. Perform human body detection on the image to obtain human detection information. Estimate at least one handheld position according to the human detection information. Determine whether the handheld position is adjacent to the antenna. If the handheld position is adjacent to the antenna, the transmission power level is decreased.

## Description

### BACKGROUND

### Field of Invention

The present invention relates to an electronic device and non-transitory computer readable medium. More particularly, the present invention relates to an electronic device and non-transitory computer readable mediums that allow adaptation of transmission power.

### Description of Related Art

Specific absorption rate is a measure to determine the rate of radio frequency energy absorbed by the human body, which is mainly performed on products with wireless transmission functions. If a distance between an antenna and the human body is less than 20 centimeters, the measurement of specific absorption rate is required, and the specific absorption rate is required to be less than a specific absorption rate limit to meet regulations.

To meet a specific absorption rate limit, when a measured specific absorption rate is higher than the specific absorption rate limit, an electrical field in the body tissue (when exposed to the radio frequency energy) is required to be reduced. That is, there is a need to decrease the transmission power of the radio frequency device.

The common manners for decreasing the transmission power of the radio frequency device are static specific absorption rate and dynamic specific absorption rate. The static specific absorption rate is the level of transmission power maintained to comply with the specific absorption rate limit. In this case, when the human body is not close to the radio frequency transmitter source, the transmission power still remains at the limited level, which leads to a decrease in upload speed, such that the user experience is poor.

The dynamic specific absorption rate can be implemented by utilizing proximity sensors to detect whether the human body is close to the radio frequency source, thereby notifying the basic input/output system to switch the specific absorption rate power table. In this case, the pattern of the proximity sensors may indirectly increase the size of antennas, which is disadvantageous towards the size requirements of product designs. Further, additional cables and controller chips are needed for the proximity sensors, which may increase cost and the assembly time at the same time.

Therefore, how to provide an electronic device to solve the above issues is an important issue in this field.

### SUMMARY

The present disclosure provides an electronic device. The electronic device includes an antenna, a radio frequency transmitter module, a camera, one or more memory and a processing circuit. The antenna is configured to transmit a radio frequency signal at a transmission power level through the antenna. The one or more memory is configured to store data and at least one instruction. The camera is configured to capture at least one image. The processing circuit is electrically coupled to the one or more memory, the camera and the radio frequency transmitter module. The processing circuit is configured to access the data and the at least one instruction stored in the one or more memory to perform following steps. Perform scene detection on at least one image to obtain scene information. Determine whether to switch an operation mode to a handheld mode according to the scene information, and in the handheld mode, the processing circuit is further configured to perform following steps. Perform human body detection on at least one image to obtain human detection information. Estimate at least one handheld position according to the human detection information. Determine whether at least one handheld position is adjacent to the antenna. If the at least one handheld position is not adjacent to the antenna, the transmission power level is controlled to remain at a first level. If at least one handheld position is adjacent to the antenna, decrease the transmission power level to a second level which is less than the first level.

In one or more embodiments, the processing circuit is further configured to perform the following steps. Determine whether to switch the operation mode to a non-handheld mode. In the non-handheld mode, the processing circuit is further configured to perform the following steps. Perform gaze detection on the at least one image to obtain gaze information. Determine whether a user is gazing at the electronic device according to the gaze information. Control the transmission power level to remain at the first level, when there is no user gazing at the electronic device. Decrease the transmission power level to the second level, when the user is gazing at the electronic device.

In one or more embodiments, the processing circuit further includes an enclosure. The antenna includes a first antenna and a second antenna. The first antenna and the second antenna are disposed along two opposite edges of the enclosure. The processing circuit is configured to access the data and the at least one instruction stored in the one or more memory to perform the following steps. Perform the scene detection on at least one image to obtain scene information. Determine whether to switch an operation mode to a handheld mode according to the scene information according to the scene information, and in the handheld mode, the processing circuit is further configured to perform following steps. Perform human body detection on at least one image to obtain human detection information. Estimate at least one handheld position according to the human detection information. Decrease at least one of the first and second transmission power levels from a first level to a second level.

In one or more embodiments, the processing circuit is further configured to perform the following steps. Determine whether the at least one handheld position is adjacent to both of the first antenna and the second antenna. Decrease the first transmission power level and the second transmission power level to the second level, when the at least one handheld position is adjacent to both of the first antenna and the second antenna.

In one or more embodiments, the processing circuit is further configured to perform the following steps. Determine whether the at least one handheld position is adjacent to the first antenna, when the at least one handheld position is not adjacent to both of the first antenna and the second antenna.

In one or more embodiments, the processing circuit is further configured to perform the following steps. Decrease the first transmission power level to the second level, and the second power transmission level remains at the first level, when the at least one handheld position is adjacent to the first antenna.

In one or more embodiments, the processing circuit is further configured to perform the following steps. Decrease the second power transmission level to the second level, and the first transmission power level remains at the first level, when the at least one handheld position is not adjacent to the first antenna.

In one or more embodiments, the processing circuit is further configured to perform the following steps. Determine whether to switch the operation mode to a non-handheld mode, according to the scene information.

In one or more embodiments, in the non-handheld mode, the processing circuit is further configured to perform the following steps. Perform gaze detection on the at least one image to obtain gaze information. Determine whether a user is gazing at the electronic device according to the gaze information. Control the first transmission power level and the second transmission power level to remain at the first level, when there is no user gazing at the electronic device.

In one or more embodiments, in the non-handheld mode, the processing circuit is further configured to perform the following steps. Decrease the first transmission power level and the second transmission power level to the second level, when the user is gazing at the electronic device.

In one or more embodiments, the gaze information comprises facial feature points and eye tracking information.

In one or more embodiments, the at least one image comprises a plurality of consecutive images, and the scene information comprises objects and changes in the plurality of consecutive images.

In one or more embodiments, the human detection information comprises positions of a plurality of human key points.

In one or more embodiments, the first level is full power, and wherein the second level complies with a specific absorption rate limit.

The present disclosure provides a non-transitory computer-readable recording media, used for storing a plurality of instructions. A processing circuit executes the instructions to perform following steps. Perform scene detection on at least one image to obtain scene information. Determine whether to switch an operation mode to a handheld mode according to the scene information, and in the handheld mode, the processing circuit executes the instructions to further perform following steps. Perform human body detection on at least one image to obtain human detection information. Estimate at least one handheld position according to the human detection information. Determine whether to decrease a transmission power level from a first level to a second level. A radio frequency signal at the transmission power level is transmitted by a radio frequency transmitter module through an antenna.

Summary, the electronic device in the present disclosure utilizes image recognition to estimate proximity between the user and the electronic device, thereby providing dynamic specific absorption rate functions.

### BRIEF DESCRIPTION OF THE DRAWINGS

The present disclosure can be more fully understood by reading the following detailed description of the embodiment, with reference made to the accompanying drawings as follows.
Fig. 1 depicts a schematic diagram of component placement of an electronic device according to some embodiments of the present disclosure.
Fig. 2 depicts a schematic diagram of a function block of an electronic device according to some embodiments of the present disclosure.
Fig. 3 depicts a flow chart of an operation method of an electronic device according to some embodiments of the present disclosure.
Fig. 4 depicts a schematic diagram of a function block of an electronic device according to some embodiments of the present disclosure.
Fig. 5A depicts a flow chart of an operation method of an electronic device according to some embodiments of the present disclosure.
Fig. 5B depicts a flow chart of step 560 included in the operation method in Fig. 5A according to some embodiments of the present disclosure.
Fig. 6A and Fig. 6B depict schematic diagrams for illustrating facial detection performed on images according to some embodiments of the present disclosure.
Fig. 7A and Fig. 7B depict schematic diagrams for illustrating human body detection performed on images according to some embodiments of the present disclosure.
Fig. 8A and Fig. 8B depict schematic diagrams for illustrating human gaze detection performed on images according to some embodiments of the present disclosure.
Fig. 9A depicts a schematic diagram about switching a transmission power level from a first level to a second level.
Fig. 9B depicts a schematic diagram about upload speeds when transmission power levels are at a first level and a second level.

### DETAILED DESCRIPTION

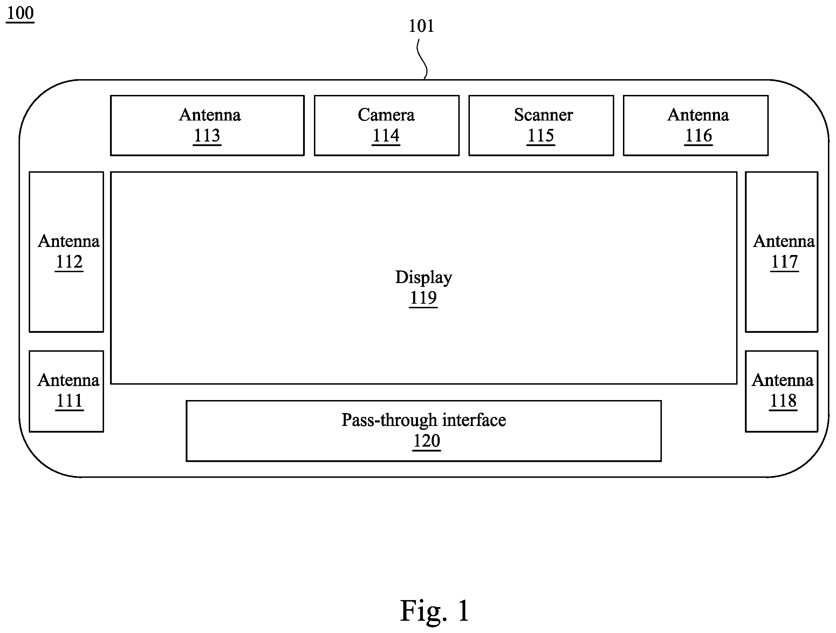

A description is provided with reference to Fig. 1. Fig. 1 depicts a schematic diagram of component placement of an electronic device 100 according to some embodiments of the present disclosure. In some embodiments, the electronic device 100 is a mobile device with wireless communication functions. In some embodiments of the present disclosure, the electronic device 100 is illustrated as a panel computer. In the other embodiments, the electronic device 100 can be a laptop, a panel or the other electronic device with wireless communication functions. Therefore, it is not intended to limit the present disclosure.

As the development of communication techniques, there needs to be more antennas in the electronic device 100. As shown in Fig. 1, the electronic device 100 includes an enclosure 101, antennas 111∼113 and antennas 116∼118. For example, the antennas 111 and 112 are multi-input multi-output antennas. The antenna 113 is a wireless wide area network main antenna. The antenna 116 is a wireless local area network main antenna, and the antenna 118 is a wireless local area network auxiliary antenna. The antenna 117 is a wireless wide area network auxiliary antenna. In some embodiments, the antenna 117 is a multi-band antenna, and the antenna 117 is able to transmit signals in low, medium and high bands of the wireless wide area network band.

In some embodiments, the antennas 111∼112 and the antennas 117∼118 are respectively disposed along opposite edges of the enclosure 101. For example, the antennas 111∼112 are disposed along the left side edge of the enclosure 101, and the antennas 117∼118 are disposed along the left side edge of the enclosure 101. In some case, if the electronic device 100 has the bigger size, and when the user held the electronic device 100 by a single hand, a distance between the user's hand and antennas disposed along the other side may exceeds a scope of distance in which the specific absorption rate is limited by regulations, and thus there is no need to decrease transmission power levels of the antennas disposed along the other side of the antenna. Therefore, the electronic device 100 of the present disclosure can determine proximity between the user and the antenna included in the electronic device 100 based on image recognition, thereby improving the transmission power adaption, and increasing upload speeds, in order to enhance user experience.

In some embodiments, the electronic device 100 further includes a camera 114. The camera 114 is disposed along an upper edge of the enclosure 101. In some embodiments, the camera 114 is a front camera. In some embodiments, the camera 114 is configured to capture at least one image. In some embodiments, at least one image includes multiple consecutive images in sequence. For example, these consecutive images can be images captured per 0.2 seconds in 5 seconds. Thus, it can be estimated from the image, by recognizing objects in the scene and changes in background, the electronic device 100 is fixed in a vehicle, placed in a panel support or handheld by a user.

In some embodiments, the electronic device 100 further includes a scanner 115, a display 119 and a pass-through interface 120. In some embodiments, the scanner 115 can be a barcode scanner. The display 119 can be a touch display.

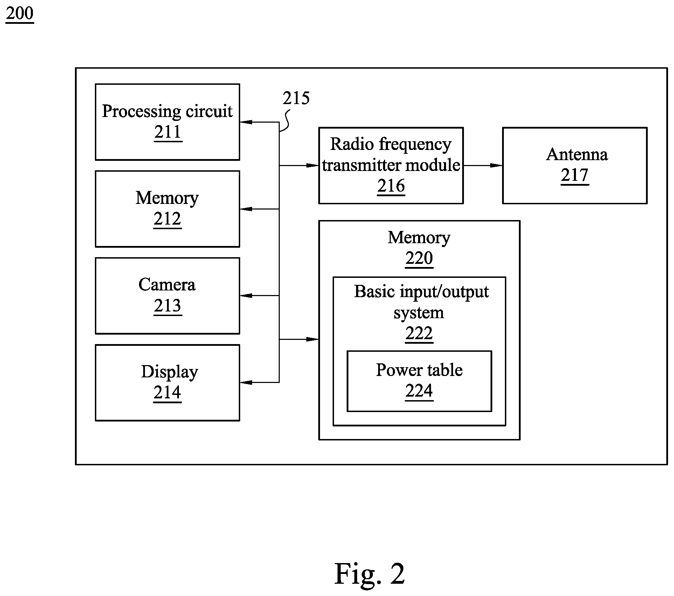

A description is provided with reference to Fig. 2. Fig. 2 depicts a schematic diagram of a function block of an electronic device 200 according to some embodiments of the present disclosure. In some embodiments, the electronic device 200 in the embodiment of Fig. 2 corresponds to the electronic device 100 in the embodiment of Fig. 1. As shown in Fig. 2, the electronic device 200 includes a processing circuit 211, a memory 212, a camera 213, a display 214, a bus 215, a radio frequency transmitter module 216, an antenna 217 and a memory 220. In some embodiments, the antenna 217 in the electronic device 200 corresponds to one of the antennas 111~113and 116∼118 in Fig. 1. In some embodiments, the camera 213 of the electronic device 200 corresponds to the camera 114 in Fig. 1.

In some embodiments, the memory 220 is configured to store data (such as, parameters of one or more neural networks for performing scene recognition task, human body detection task and gaze detection task) and computer executable instructions. In some embodiments, the memory 220 can include dynamic memory, static memory, hardware and/or flash memory.

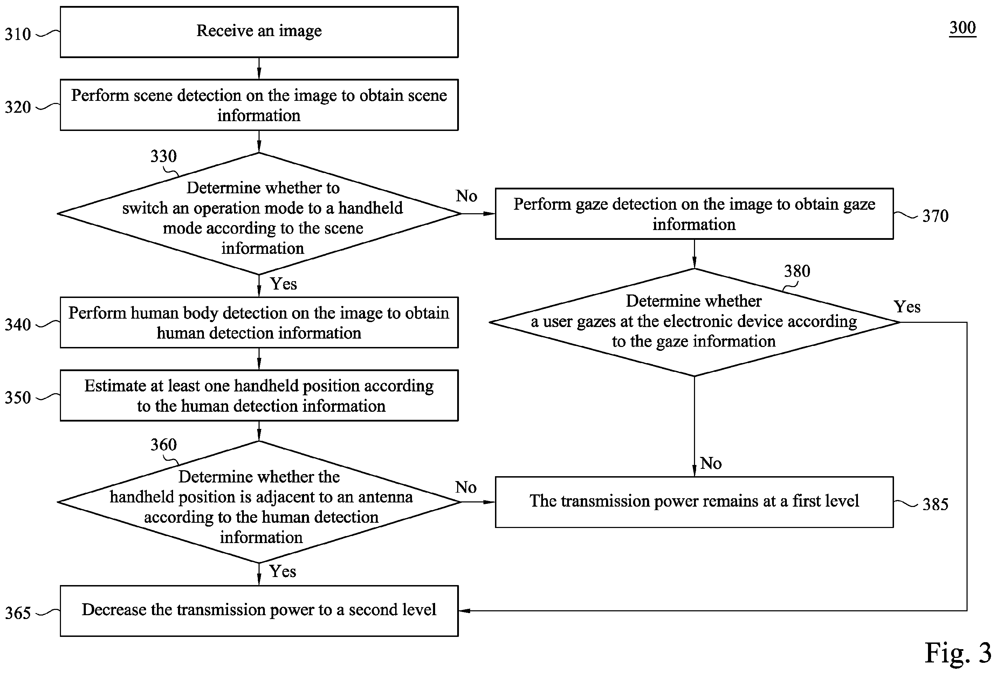

In some embodiments, the processing circuit 211 is coupled to the memory 220, and the processing circuit 211 accesses the data and instructions from the memory 220 to perform steps of an operation method 300 in Fig. 3. In some embodiments, the processing circuit 211 includes a central processing unit, a graphics processing unit, a tensor processing unit, an application specific integrated circuit, or any equivalent processing circuit.

In some embodiments, the processing circuit 211 communicates and transmits data with other components through the bus 215. In the other embodiments, the processing circuit 211 communicates or transmits data with the memory 212, the camera 213, the display 214, the memory 220 and the radio frequency transmitter module 216 through multiple communication interfaces, respectively. Therefore, it is not intended to limit the present disclosure.

In some embodiments, the radio frequency transmitter module 216 includes a baseband processor, radio frequency front end circuit and other components. In some embodiments, the radio frequency transmitter module 216 is configured to transmit a radio frequency signal at a transmission power level through the antenna 217.

In some embodiments, the basic input/output system 222 is stored in the memory 220, and the basic input/output system 222 includes a power table 224. The power table 224 includes data of transmission power levels in multiple modes. Thus, the basic input/output system 222 can switch the operation mode in the power table 224 to change the transmission power level of the radio frequency signal transmitted by the radio frequency transmitter module 216 through the antenna 217.

A description is provided with reference to Fig. 2 and Fig. 3. Fig. 3 depicts a flow chart of an operation method 300 of an electronic device 200 according to some embodiments of the present disclosure. The operation method 300 includes steps 310, 320, 330, 340, 350, 360, 365, 370, 380 and 385. In some embodiments, the operation method 300 can be performed by accessing data and at least one instruction stored in one or more memory (such as, the memory 212 and/or the memory 220) by the processing circuit 211.

In step 310, an image is received. In some embodiments, the camera 213 is configured to capture at least one image. In some embodiments, at least one image includes multiple consecutive images in sequence. For example, the camera 213 is a front camera, capturing one or more images that may include objects and changes in background in a scene, such as, user's pose, user's head width and other information.

In step 319, scene detection is performed on the image to obtain scene information. In some embodiments, the processing circuit 211 can utilize a neural network for scene detection tasks to perform scene detection on the image, thereby obtaining objects and changes in background in a scene and other information. In some embodiments, the objects in the scene can be, such as, human, backseats, conference tables and chairs and other objects that can be recognized or classified by an object detection/recognition neural network. In some embodiments, the changes in the scene can be, such as, recognizing particular points in an image, and tracking the movements of the particular points in the consecutive images.

In step 330, whether to switch an operation mode to a handheld mode is determined according to the scene information. In step 330, if YES, step 340 is continued to enter the handheld mode. If No, step 370 is continued to enter the non-handheld mode. For example, if the scene information includes bounding boxes of backseats (which occupies most of the area of the image), it represents that the electronic device 200 is placed in panel support fixed in the vehicle, and the operation mode is switched to the non-hand mode. For another example, if the scene information does not include backseats, and the scene information includes faces and particular points that shake or vibrate at certain patterns in the consecutive images, it represents that the electronic device 200 may be handheld by the user, and the operation mode is switched to the handheld mode. For the other example, if the scene information includes conference tables and chairs, faces and particular points which are static in the consecutive images, it represents that the electronic device 200 can be placed on the conference table, and the operation mode is switched to the non-handheld mode.

In step 340, human body detection is performed on the image to obtain human detection information. In some embodiments, the processing circuit 211 can utilize a neural network for human body detection task (or key point detection task) to perform human body detection on the image, thereby obtaining multiple positions of human key points and information associated with the body pose. In some embodiments, the positions of human key points can be the positions of human body parts or joints, such as the head, neck, shoulders and hand axis. Therefore, the user's pose can be estimated from the human key points.

In step 350, at least one handheld position is estimated according to the human detection information. For example, if the user's right arm is raised, and the left arm hangs down naturally, it is determined that the handheld position is the right side portion of the electronic device 200.

In step 360, whether the handheld position is adjacent to the antenna is determined. If YES, step 365 is continued. If NO, step 385 is continued. For example, if the handheld position is the left side portion of the electronic device 200, and the antenna 217 is disposed along the right side of the electronic device 200, it is determined that the handheld position is not adjacent to the antenna 217. On the other hand, if the handheld position is the right side portion of the electronic device 200, and the antenna 217 is disposed along the right side of the electronic device 200, it is determined that the handheld position is adjacent to the antenna 217.

In step 365, the transmission power is decreased to a second level. For example, if the handheld position is adjacent to the antenna 217, the transmission power level of the radio frequency signal transmitted by the radio frequency transmitter module 216 through the antenna 217 is decreased from the first level to the second level, where the first level is a full power (or a maximum power), and the second level is a power level complying with the specific absorption rate limit.

In step 385, the transmission power remains at the first level. For example, if the handheld position is not adjacent to the antenna 217, the transmission power level of the radio frequency signal transmitted by the radio frequency transmitter module 216 through the antenna 217 remains at the first level, where the first level is a full power (or a maximum power).

In step 370, gaze detection is performed on the image to obtain gaze information. In some embodiments, the processing circuit 211 can utilize a neural network for gaze detection tasks to perform gaze detection on the image, thereby obtaining facial feature points and eye tracking information. In some embodiments, the eye tracking information includes eye pupil positions and gaze direction in the consecutive images, which can be estimated from changes in the facial feature points.

In step 380, whether the user gazes at the electronic device is determined according to the gaze information. For example, if a user gazes at the electronic device 200 is determined according to the eye pupil positions and gaze direction, step 365 is continued. On the other hand, if it is determined there is no user gazing at the electronic device 200 according to the eye pupil positions and gaze direction, step 385 is continued.

In some embodiments, the operation method 300 further includes a step of calculating face width according to the facial feature points, thereby estimating proximity between the user and the electronic device 200. If the proximity is less than a threshold, step 365 is continued. On the other hand, if the proximity is not less than the threshold, step 385 is continued.

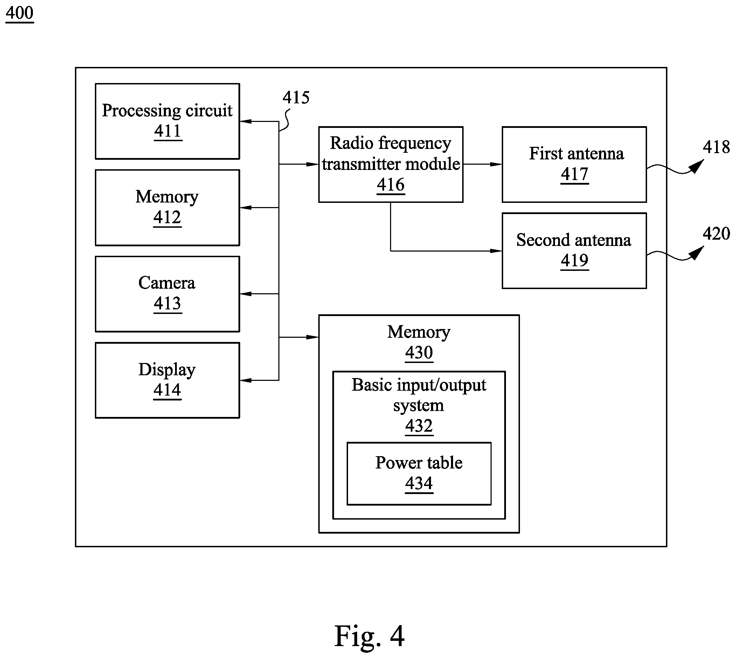

A description is provided with reference to Fig. 4. Fig. 4 depicts a schematic diagram of a function block of an electronic device 400 according to some embodiments of the present disclosure. In some embodiments, the electronic device 400 in the embodiment of Fig. 4 corresponds to the electronic device 100 in the embodiment of Fig. 1. As shown in Fig. 4, the electronic device 400 includes a processing circuit 411, a memory 412, a camera 413, a display 414, a bus 415, a radio frequency transmitter module 416, a first antenna 417, a second antenna 419 and a memory 430. In some embodiments, the first antenna 417 and the second antenna 419 included in the electronic device 400 respectively correspond to the antennas disposed along opposite edges of the electronic device 100 in Fig. 1. For example, the first antenna 417 corresponds to the antenna (such as, the antenna 111 or 112) disposed along the left side edge of the electronic device 100, and the second antenna 419 corresponds to the antenna (such as, the antenna 117 or 118) disposed along the right side edge of the electronic device 100.

In some embodiments, the radio frequency transmitter module 416 includes one or more baseband processor, one or more radio frequency front end circuit and other components. In some embodiments, the radio frequency transmitter module 416 transmitted a radio frequency signal 418 at a first transmission power level through the first antenna 417, and transmits a radio frequency signal 420 at a second transmission power level through the second antenna 419, wherein the transmission power level can changed to the first or the second transmission power levels by switching the operation modes included in the power table 434. In some embodiments, the power table 434 can be expressed by the following Table 1.

**Table 1**

| Power table | | |
|---|---|---|
| operation mode | first antenna (left side) | second antenna (right side) |
| handheld mode (both hands) | low level | low level |
| handheld mode (left hand) | low level | high level |
| handheld mode (right hand) | high level | low level |
| non-handheld mode (gaze detected) | low level | low level |
| non-handheld mode (no gaze detected) | high level | high level |

In some embodiments, the processing circuit 411, the memory 412, the camera 413, the display 414, the memory 430 and the radio frequency transmitter module 416 included in the electronic device 400 respectively correspond to the processing circuit 211, the memory 212, the camera 213, the display 214, the memory 220 and the radio frequency transmitter module 216 included in the electronic device 200 in Fig. 2, and the description thereof is omitted here.

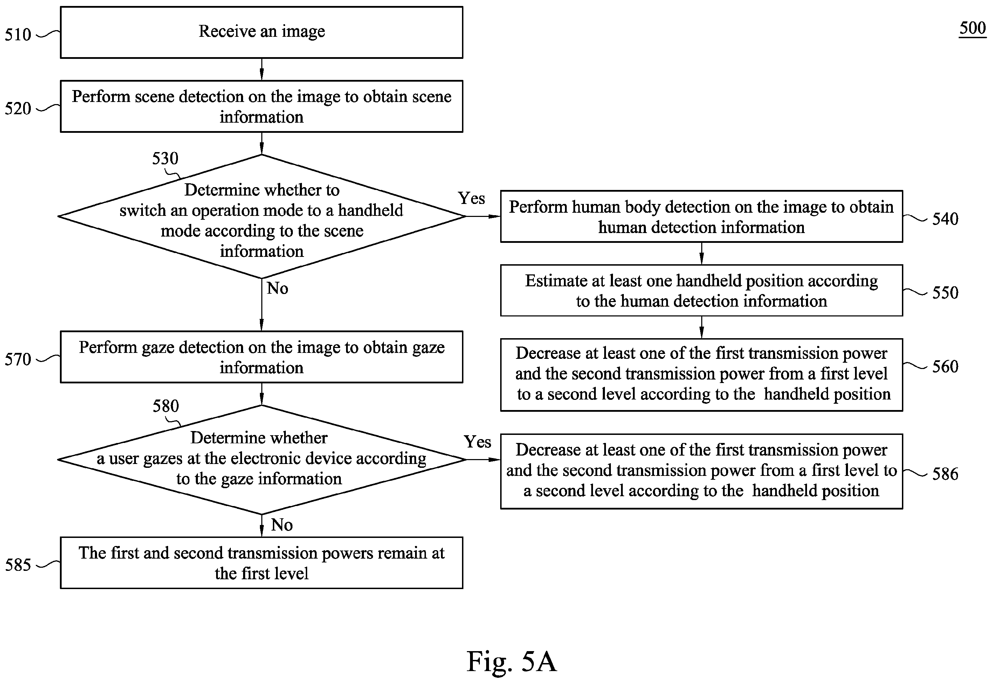

A description is provided with reference to Fig. 4 and Fig. 5A. Fig. 5A depicts a flow chart of an operation method 500 of an electronic device 400 according to some embodiments of the present disclosure. The operation method 500 includes steps 510, 520, 530, 540, 550, 560, 570, 580, 585 and 586. In some embodiments, steps 510, 520, 530, 540, 550, 570 and 580 included in the operation method 500 correspond to steps 310, 320, 330, 340, 350, 370 and 380, and the description thereof is omitted here. In some embodiments, the operation method 500 can be performed by accessing data and at least one instruction stored in one or more memory (such as, the memory 412 and/or the memory 430) by the processing circuit 411.

In step 560, in the handheld mode, one of the first and second transmission powers is decreased from a first level to a second level according to the handheld position. Step 560 will be described in detail in the embodiments of Fig .5B.

In step 580, whether the user gazes at the electronic device is determined according to the gaze information. If NO, step 585 is continued, thereby remaining the first and the second transmission powers at the first level. If YES, step 586 is continued, thereby decreasing the first and the second transmission powers to the second level. In some embodiments, step 585 corresponds to the non-handheld mode (no gaze detected) in the power table 434, and step 586 corresponds to the handheld mode (gaze detected) in the power table 434.

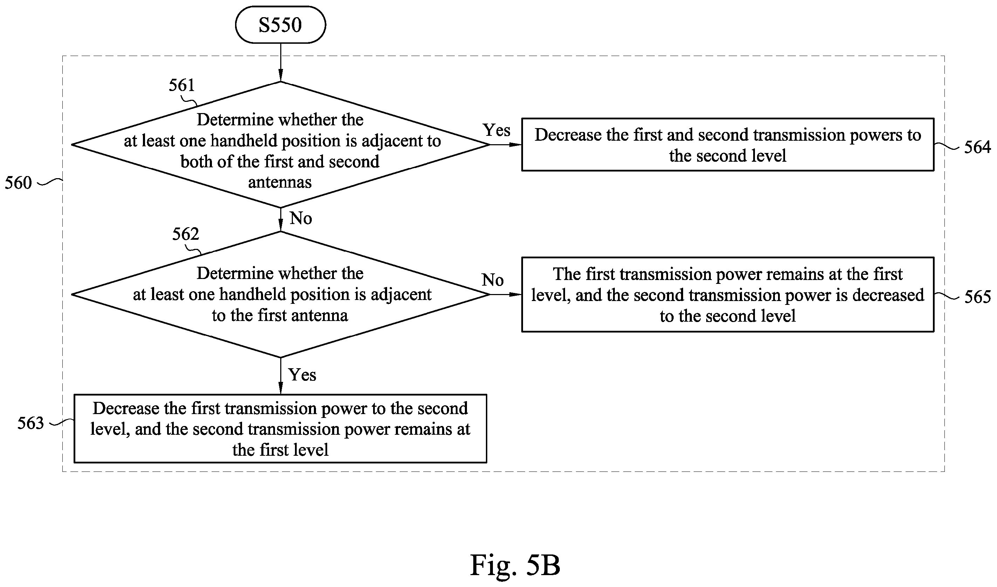

A description is provided with reference to Fig. 5B. Fig. 5B depicts a flow chart of step 560 included in the operation method in Fig. 5A according to some embodiments of the present disclosure. As shown in Fig. 5B, step 560 includes steps 561~565.

In step 561, whether at least one handheld position is adjacent to both of the first and second antennas is determined. If YES, step 564 is continued to decrease the first and second transmission powers to the second level. If NO, step 562 is continued. In some embodiments, step 564 corresponds to the handheld mode (both hands) in the power table 434.

In step 562, whether at least one handheld position is adjacent to the first antenna is determined. If NO, step 565 is continued to remain the first transmission power at the first level, and decrease the second transmission power to the second level. If YES, step 563 is continued to decrease the first transmission power to the second level, and the second transmission power remains at the first level. In some embodiments, step 565 corresponds to the handheld mode (left hand) in the power table 434, and step 563 corresponds to the handheld mode (right hand) in the power table 434.

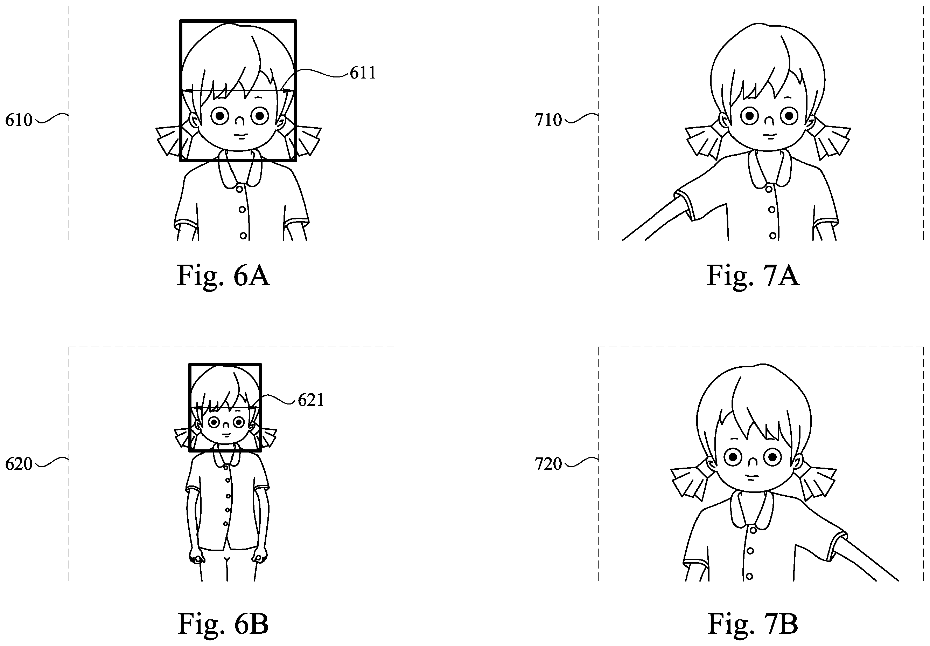

A description is provided with reference to Fig. 6A and Fig. 6B. Fig. 6A and Fig. 6B depict schematic diagrams for illustrating facial detection performed on images 610 and 620 according to some embodiments of the present disclosure. **In** some embodiments, gaze detection tasks or the face detection tasks are performed to detect multiple facial feature points and the head width and other information can be estimated from the facial feature points, thereby estimating the proximity between user and the electronic device according to the head width. For example, as shown in Fig. 6A, the user's head width 611 in the image 610 is larger than the user's head width 621 in the image 620. As a result, based on the feature length (such as, the head width), whether the proximity between user and the electronic device is less than a threshold can be estimated and determined.

A description is provided with reference to Fig. 7A and Fig. 7B. Fig. 7A and Fig. 7B depict schematic diagrams for illustrating human body detection performed on images 710 and 720 according to some embodiments of the present disclosure. In some embodiments, human body detection tasks are performed to detect multiple human key points (such as, head, shoulder, neck, shoulders, hand shafts, joints or other body parts), and user's pose and other information can be estimated from these human key points, thereby estimating the proximity between user and the electronic device according to the user's pose. For example, as shown in Fig. 7A, the user's right arm is raised and the left arm hangs down naturally in the image 710, it may represent that the user held the electronic device by the right hand. The user's left arm is raised and the right arm hangs down naturally in the image 720, it may represent that the user held the electronic device by left hand. Thus, based on the user's pose, if the user is adjacent to the left side and/or the right side of the electronic device can be estimated or determined.

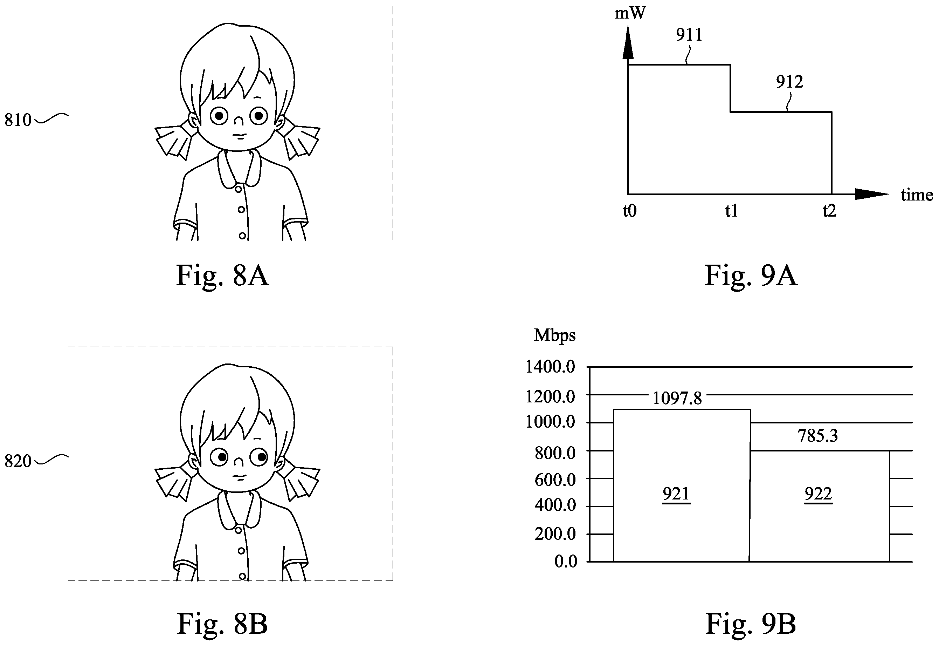

A description is provided with reference to Fig. 8A and Fig. 8B. Fig. 8A and Fig. 8B depict schematic diagrams for illustrating human gaze detection performed on images 810 and 820 according to some embodiments of the present disclosure. In some embodiments, the gaze detection tasks are performed to obtain eye tracking information (such as eye pupil positions and gaze direction). For example, as shown in Fig. 8A, the user gazing at the camera is detected in the image 810. In the image 820, there is no gaze detected. Thus, based on the eye tracking information of the user, whether the transmission power is decreased can be determined.

A description is provided with reference to Fig. 9A. Fig. 9A depicts a schematic diagram about switching a transmission power level from a first level 911 to a second level 912. In some embodiments, in an interval t0~t1, the power transmission level remains at the first level 911, and at t1, the power transmission level is decreased from the first level 911 to the second level 912. In some embodiments, the first level is full power (such as, 24 dB), and the second level is a value that complies with the specific absorption rate limit (such as, 9 dB or 12 dB).

A description is provided with reference to Fig. 9B. Fig. 9B depicts a schematic diagram about upload speeds when transmission power levels are at a first level and a second level. In some embodiments, when the power transmission level is at the first level 911 (such as, 24 dB), the upload speed is 1097.8 Mbps. In some embodiments, when the power transmission level is at the second level 921 (such as, 9 dB), the upload speed is 785.3 Mbps.

Summary, the electronic devices 100, 200 and 400 in the present disclosure can estimate the proximity between user and the electronic device based on image recognition, thereby providing the dynamic specific absorption rate functions.

## Claims

1. An electronic device (200; 400), comprising:
an antenna (217);
a radio frequency transmitter module (216), configured to transmit a radio frequency signal at a transmission power level through the antenna;
a camera (213), configured to capture at least one image;
one or more memory (212, 220), configured to store data and at least one instruction; and
a processing circuit (211), electrically coupled to the one or more memory (212, 220), the camera (213) and the radio frequency transmitter module (216), and the processing circuit (211) is configured to access the data and the at least one instruction stored in the one or more memory (212, 220) to:
perform scene detection on the at least one image to obtain scene information; and
determine whether to switch an operation mode to a handheld mode according to the scene information, and wherein in the handheld mode, the processing circuit (211) is further configured to:
perform human body detection on the at least one image to obtain human detection information;
estimate at least one handheld position according to the human detection information;
determine whether the at least one handheld position is adjacent to the antenna;
when the at least one handheld position is not adjacent to the antenna (217), control the transmission power level to remain at a first level; and
when the at least one handheld position is adjacent to the antenna (217), decrease the transmission power level to a second level which is less than the first level.

2. The electronic device (200; 400) of claim 1, wherein the processing circuit (211) is further configured to:
determine whether to switch the operation mode to a non-handheld mode, and wherein in the non-handheld mode:
perform gaze detection on the at least one image to obtain gaze information;
determine whether a user is gazing at the electronic device (200) according to the gaze information;
when there is no user gazing at the electronic device (200), control the transmission power level to remain at the first level; and
when the user is gazing at the electronic device (200), decrease the transmission power level to the second level.

3. The electronic device (400) of claim 1, comprising:
an enclosure (101);
wherein the antenna comprises a first antenna (417) and a second antenna (419), disposed along two opposite edges of the enclosure;
wherein the radio frequency transmitter module (416) is further configured to transmit a first radio frequency signal at a first transmission power level through the first antenna (417), and to transmit a second radio frequency signal at a second transmission power level through the second antenna (419);
the processing circuit (411) is configured to access the data and the at least one instruction stored in the one or more memory (412, 430) to:
perform the scene detection on the at least one image to obtain the scene information; and
determine whether to switch the operation mode to the handheld mode according to the scene information, and in the handheld mode, the processing circuit (411) is further configured to:
perform the human body detection on the at least one image to obtain the human detection information;
estimate the at least one handheld position according to the human detection information; and
decrease at least one of the first transmission power level or the second transmission power level from the first level to the second level according to the at least one handheld position.

4. The electronic device (200; 400) of claim 3, wherein the processing circuit (411) is further configured to:
determine whether the at least one handheld position is adjacent to both of the first antenna (417) and the second antenna (419); and
when the at least one handheld position is adjacent to both of the first antenna (417) and the second antenna (419), decrease the first transmission power level and the second transmission power level to the second level.

5. The electronic device (200; 400) of claim 4, wherein the processing circuit (411) is further configured to:
when the at least one handheld position is not adjacent to both of the first antenna (417) and the second antenna (419), determine whether the at least one handheld position is adjacent to the first antenna (417).

6. The electronic device (200; 400) of claim 4 or 5, wherein the processing circuit (411) is further configured to:
when the at least one handheld position is adjacent to the first antenna (417), decrease the first transmission power level to the second level, and the second power transmission level remains at the first level.

7. The electronic device (200; 400) of claim 4, 5 or 6, wherein the processing circuit (411) is further configured to:
when the at least one handheld position is not adjacent to the first antenna (417), the first transmission power level remains at the first level, and decrease the second power transmission level to the second level.

8. The electronic device (200; 400) of claim 3, wherein the processing circuit (411) is further configured to:
determine whether to switch the operation mode to a non-handheld mode, according to the scene information.

9. The electronic device (200; 400) of claim 8, wherein in the non-handheld mode, the processing circuit (411) is further configured to:
perform gaze detection on the at least one image to obtain gaze information;
determine whether a user is gazing at the electronic device (100; 400) according to the gaze information; and
when there is no user gazing at the electronic device (100; 400), control the first transmission power level and the second transmission power level to remain at the first level.

10. The electronic device (200; 400) of claim 9, wherein in the non-handheld mode, the processing circuit (411) is further configured to:
when the user is gazing at the electronic device (100; 400), decrease the first transmission power level and the second transmission power level to the second level.

11. The electronic device (200; 400) of claims 1-10, wherein the gaze information comprises facial feature points and eye tracking information.

12. The electronic device (200; 400) of claims 1-11, wherein the at least one image comprises a plurality of consecutive images, and the scene information comprises objects and changes in the plurality of consecutive images.

13. The electronic device (200; 400) of claims 1-12, wherein the human detection information comprises positions of a plurality of human key points.

14. The electronic device (200; 400) of claims 1-13, wherein the first level is full power, and wherein the second level complies with a specific absorption rate limit.

15. A non-transitory computer readable medium for storing a plurality of instructions, wherein a processing circuit (211) executes the plurality of instructions to:
perform scene detection on at least one image to obtain scene information; and
determine whether to switch an operation mode to a handheld mode according to the scene information, and wherein in the handheld mode, the processing circuit (211) executes the plurality of instructions further to:
perform human body detection on the at least one image to obtain human detection information;
estimate at least one handheld position according to the human detection information; and
determine whether to decrease a transmission power level from a first level to a second level,
wherein a radio frequency signal at the transmission power level is transmitted by a radio frequency transmitter module through an antenna (217).
